# EUROPÄISCHE PATENTSCHRIFT

(11) **EP 1 141 587 B1**
(45) Veröffentlichungstag und Bekanntmachung des Hinweises auf die Patenterteilung: **12.11.2003**
(21) Anmeldenummer: 00984865.6
(22) Anmeldetag: 25.10.2000
(51) Int. Cl.: F16H 59/02

(54) **SCHALTVORRICHTUNG FÜR EIN ELEKTRONISCH GESTEUERTES AUTOMATIKGETRIEBE EINES KRAFTFAHRZEUGES**
GEAR-CHANGE SYSTEM FOR AN ELECTRONICALLY CONTROLLED VEHICLE AUTOMATIC GEARBOX
DISPOSITIF DE COMMUTATION POUR BOITE DE VITESSES AUTOMATIQUE DE VEHICULE A COMMANDE ELECTRONIQUE

(30) Priorität: 26.10.1999 DE 19951374
(43) Veröffentlichungstag der Anmeldung: 10.10.2001
(73) Patentinhaber: ZF Lemförder Metallwaren AG, 49448 Lemförde (DE)
(72) Erfinder: VOLLMAR, Reinhard, 88213 Ravensburg (DE)
(86) Internationale Anmeldenummer: DE0003777
(87) Internationale Veröffentlichungsnummer: WO01031232

(56) Entgegenhaltungen:
- EP-A- 0 602 685
- EP-A- 0 725 237
- DE-A- 3 735 184
- DE-A- 19 637 533
- DE-A- 19 915 892
- DE-U- 9 320 309

## Beschreibung

Die Erfindung betrifft eine Schaltvorrichtung für ein durch ein elektronisches Steuergerät gesteuertes Fahrzeugautomatgetriebe, insbesondere für Kraftwagen, nach der im Oberbegriff des Patentanspruchs 1 näher definierten Art.

Die EP 0 602 685 A1 beschreibt eine derartige gattungsgemäße Schaltvorrichtung für ein durch ein elektronisches Steuergerät gesteuertes Fahrzeugautomatgetriebe, insbesondere für Kraftwagen, mit einer ersten Schalteinrichtung, in der mittels manueller Anwahl verschiedene automatisch zu schaltende Getriebegänge vorwählbar sind, und mit einer zweiten mittels einer Wähleinrichtung betätigbaren Schalteinrichtung, in der die Wähleinrichtung in neutraler Mittellage gehalten ist, aus der sie durch manuelle Betätigung in eine erste Richtung zur Auslösung von Hochschaltungen und in eine zweite Richtung zur Auslösung von Rückschaltungen bewegbar ist, wobei die Schaltbewegungen der Wähleinrichtung sensorisch erfaßt werden und als Signale in das Steuergerät eingehen und die zweite Schalteinrichtung eine Schaltposition für die Wähleinrichtung zur Einfach-Rückschaltung in die nächstniedrigere Gangstufe und eine weitere Schaltposition zur Maximal-Rückschaltung in die Gangstufe mit kleinstmöglicher Übersetzung und/oder eine Schaltposition für die Wähleinrichtung zur Einfach-Hochschaltung in die nächsthöhere Gangstufe und eine weitere Schaltposition zur Maximal-Hochschaltung in die Gangstufe mit größstmöglicher Übersetzung aufweist.

Aus der Praxis sind beispielsweise bei PKW-Automatgetrieben mit elektronischer Steuerung auch Schaltvorrichtungen bekannt, bei denen ein Fahrer über einen Wählhebel einen Automatikfahrmodus anwählt. Üblicherweise ist hierzu für den Wählhebel eine Schaltgasse mit mehreren Sensoren vorgesehen, wobei den Sensoren jeweils eine Schaltposition eines dynamischen Schaltprogramms zugeordnet ist. So kann mit dem Wählhebel mechanisch z.B. eine Schaltposition P für Parken, R für Rückwärtsfahrt, N für Neutral (Leerlauf) und D für Vorwärtsfahrt (Drive) angewählt werden, bei denen ein automatisches Schalten zwischen der kleinsten Gangstufe und der größten vorhandenen Gangstufe in Abhängigkeit von der Stellgeschwindigkeit des Gaspedales, der Motordrehzahl, der Fahrzeugbeschleunigung und weiterer wichtiger, in einem elektronischen Steuergerät zur Verfügung stehender Größen vorgenommen wird. Das elektronische Steuergerät des Automatgetriebes enthält hierzu Module, welche die Schaltkennlinien des Getriebes automatisch je nach Fahrweise und Fahrsituation verschieben.

Darüber hinaus weisen derartige bekannte Schaltvorrichtungen häufig Schaltpositionen für eine maximal hochschaltbare Gangstufe auf. So kann z.B. mit einer Schaltposition "4" ein fünfter Gang gesperrt werden, wenn es unter bestimmten Fahrbedingungen zu häufigem Gangwechsel zwischen dem vierten und dem fünften Gang kommt, während z.B. mit einer Schaltposition "2" ein Hochschalten in einen höheren Gang z.B. im Gebirge bei längeren Steigungen und auf Gefällstrecken verhindert wird. Daneben kann natürlich auch eine Schaltposition für den ersten Gang vorgesehen sein. Mit der Bereitstellung derartiger Schaltpositionen für verschiedene Schaltbereiche kann eine bessere Nutzung der Motorleistung unter Mitbenutzung der Motorbremswirkung erreicht werden sowie ein unnötiges Hoch- und Runterschalten vermieden werden.

Um ein einfaches manuelles Wechseln zwischen den einzelnen Gangstufen zu ermöglichen und um dem Fahrer die Möglichkeit eines manuellen Betriebs beispielsweise zur Realisierung einer sportlicheren Fahrweise zu ermöglichen, weisen derartige bekannte Schaltvorrichtungen häufig eine weitere Schalteinrichtung zur sogenannten "Tipp-Schaltung" auf, bei denen durch Antippen eines entsprechenden Sensors über den Wählhebel oder einen separaten Schalter oder Taster in die nächsttiefere oder nächsthöhere Gangstufe geschaltet werden kann.

Eine derartige Schaltvorrichtung ist aus der DE 38 07 881 C2 bekannt, wobei hier das "Manuell-Programm" der Tippschaltung mittels einer zur Schaltgasse des dynamischen Schaltprogramms parallelen zweiten Schaltgasse realisiert ist. Zur Ausführung des Manuell-Programms wird der Wählhebel über eine Quergasse in die zweite Schaltgasse umgeschaltet, in der er durch Federn in neutraler Mittellage gehalten ist und beim manuellen Verschwenken Hochschaltungen und Rückschaltungen am Getriebe dadurch auslöst, dass die Schaltbewegungen des Wählhebels durch Sensoren erfaßt werden, deren Signale in das Steuergerät des Automatgetriebes eingehen.

Bei allen beschriebenen Lösungen mit einer manuellen Tipp-Schaltung zusätzlich zu einem dynamischen Schaltprogramm wird durch Antippen eines Plus-Sensors in den nächsthöheren Gang manuell hochgeschaltet und durch Antippen eines Minus-Sensors manuell in den nächstniedrigen Gang runtergeschaltet.

Dies hat in bestimmten Fahrsituationen, in denen beispielsweise für eine extrem starke Beschleunigung ein Rückschalten um mehrere Gangstufen oder eine starke Hochschaltung gewünscht wird, den Nachteil, dass der Plus-Sensor oder der Minus-Sensor jeweils mehrmals in Folge angetippt werden müssen. Dies stellt nicht nur eine Beeinträchtigung des Bedienkomforts dar, sondern kann in kritischen Fahrsituationen, wie z.B. bei einem Überholvorgang, zu sicherheitsgefährdenden Verzögerungen im Manuell-Programm und zu Fehlverhaltensweisen des Fahrers führen.

Es ist daher Aufgabe der vorliegenden Erfindung, eine Schaltvorrichtung für ein durch ein elektronisches Steuergerät gesteuertes Fahrzeugautomatgetriebe, insbesondere für Kraftwagen, zu schaffen, bei der in einem Manuell-Programm ein Rückschalten oder Hochschalten um mehrere Gangstufen bedienungsmäßig vereinfacht wird.

Erfindungsgemäß wird diese Aufgabe mit einer Schaltvorrichtung gemäß den kennzeichnenden Merkmalen des Patentanspruchs 1 gelöst.

Mit der erfindungsgemäßen Schaltvorrichtung, bei der die zweite Schalteinrichtung eine Schaltposition für die Wähleinrichtung zur Einfach-Rückschaltung in die nächstniedrigere Gangstufe und eine weitere Schaltposition zur Maximal-Rückschaltung in die Gangstufe mit kleinstmöglicher Übersetzung und gegebenenfalls eine Schaltposition für die Wähleinrichtung zur Einfach-Hochschaltung in die nächsthöhere Gangstufe sowie eine weitere Schaltposition zur Maximal-Hochschaltung in die Gangstufe mit größtmöglicher Übersetzung aufweist, wird der Bedienkomfort für gewünschte Rückschaltungen oder Hochschaltungen um mehrere Gangstufen im Manuell-Programm für den Fahrer optimiert.

Im Gegensatz zu herkömmlichen Tipp-Schaltungen ist es nicht mehr erforderlich, für jede runter- bzw. hochzuschaltende Gangstufe eine eigene Tippbewegung der Wähleinrichtung auszuführen, sondern es genügt eine einzige Tippbewegung, um eine maximale Rückschaltung oder Hochschaltung auszuführen.

Erfindungsgemäß sind die Schaltposition zur Maximal-Rückschaltung und/oder die Schaltposition zur Maximal-Hochschaltung in der jeweiligen Betätigungsrichtung weiter entfernt von der neutralen Mittellage der Wähleinrichtung angeordnet, als die Schaltpositionen zur Einfachschaltung.

In einer besonders vorteilhaften Ausführung der Erfindung kann dabei vorgesehen sein, dass am Übergang von der Schaltposition zur Einfach-Rückschaltung in die Schaltposition zur Maximal-Rückschaltung bzw. am Übergang von der Schaltposition zur Einfach-Hochschaltung in die Schaltposition zur Maximal-Hochschaltung ein erhöhter Bewegungswiderstand für die Wähleinrichtung vorgesehen ist. Auf diese Weise wird vom Fahrer deutlich wahrgenommen, daß er die Schaltposition zur Maximal-Rückschaltung oder Maximal-Hochschaltung anwählt, so daß ein versehentliches Antippen dieser Schaltposition und damit ein unerwünschtes oder sogar die Fahrzeugstabilität beeinträchtigendes Schalten deutlich verhindert wird. Dabei kann selbstverständlich vorgesehen sein, daß nur eine Schaltposition zur Einfach-Hochschaltung vorhanden ist, während für die Rückschaltung die Schaltposition zur Einfach-Rückschaltung und zur Maximal-Rückschaltung zur Verfügung stehen, da eine Maximal-Rückschaltung vor allem bei sportlich ambitionierten Fahrern häufiger gewünscht werden wird als eine Maximal-Hochschaltung.

Die erfindungsgemäße Schaltvorrichtung eignet sich insbesondere für Kraftwagen mit einem elektronisch gesteuerten Fahrzeugautomatgetriebe, welches ein Stufenautomatgetriebe oder ein CVT-Automatgetriebe sein kann. Es sind jedoch auch Anwendungen in anderen Fahrzeugen, wie z.B. Krafträdern oder Wasserfahrzeugen mit elektronisch gesteuerten Fahrzeugautomatgetrieben denkbar, da auch hier häufig ein Fahrerwunsch nach Schaltungen, insbesondere Rückschaltungen, mit maximaler Geschwindigkeit um mehrere Gangstufen gegeben ist.

Weitere Vorteile und vorteilhafte Ausführungen der Erfindung ergeben sich aus den weiteren Patentansprüchen und aus den anhand der Zeichnung prinzipmäßig beschriebenen Ausführungsbeispielen.

Es zeigt:
- Fig.1: eine schematisierte Darstellung einer Schaltvorrichtung für ein durch ein elektronisches Steuergerät gesteuertes Fahrzeugautomatgetriebe gemäß der Erfindung;
- Fig.2: eine weitere Ausführung der erfindungsgemäßen Schaltvorrichtung mit einer als Tipp-Taste ausgebildeten Wähleinrichtung an einem Multifunktionslenkrad;
- Fig.3: eine weitere Ausführung der Wähleinrichtung der erfindungsgemäßen Schaltvorrichtung als Drehschalter; und
- Fig.4: eine weitere Ausführung der Wähleinrichtung der erfindungsgemäßen Schaltvorrichtung als Wipp-Schalter.

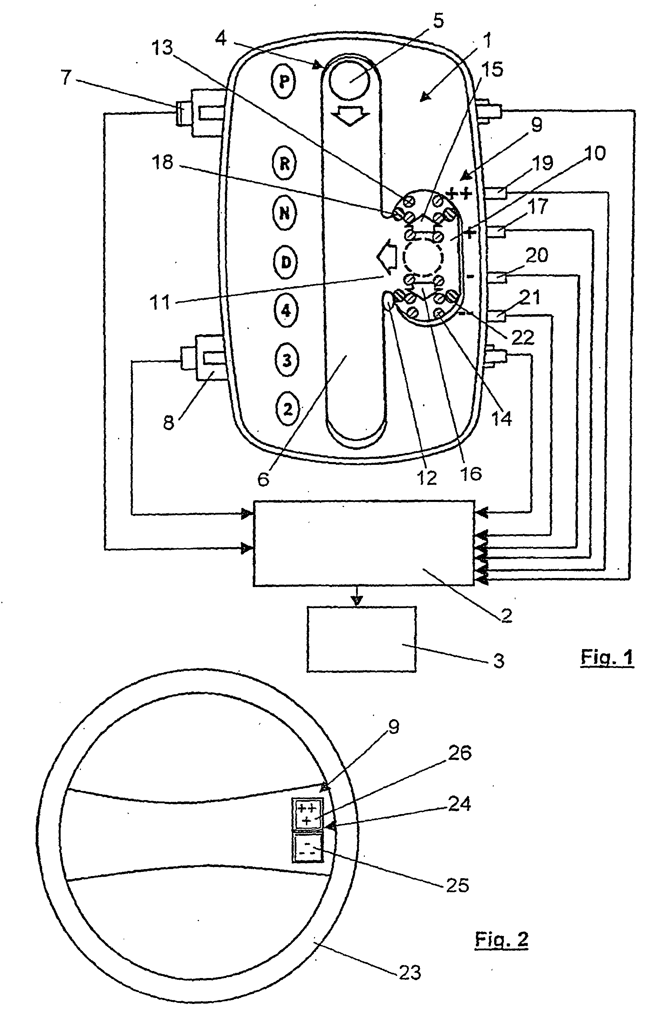

Bezug nehmend auf Fig. 1 ist eine Schaltvorrichtung 1 für ein durch ein elektronisches Steuergerät 2 gesteuertes Fahrzeugautomatgetriebe 3 dargestellt, wobei letztere nur symbolisch angedeutet sind. Die Schaltvorrichtung 1, welche hier in einem Personenkraftwagen vorgesehen ist, weist eine erste Schalteinrichtung 4 für ein dynamisches Schaltprogramm auf, in der mittels Anwahl einer Schaltposition P zum Parkieren des Fahrzeugs, einer Schaltposition R zur Rückwärtsfahrt, einer Schaltposition N für den Leerlauf, und eine Schaltposition D für Automatik-Vorwärtsfahrt nach Vorgabe einer adaptiven Getriebesteuerung verschiedene automatisch zu schaltende Getriebegänge vorwählbar sind. Dies geschieht mittels eines als Wähleinrichtung fungierenden Wählhebels 5, welcher in einer ersten Schaltgasse 6, in der Sensoren für die vorbeschriebenen Schaltpositionen angeordnet sind, verschiebbar ist. In dieser ersten Schaltgasse 6 sind neben den Schaltpositionen P, R, N und D noch weitere Schaltpositionen "4" für eine vierte Gangstufe, "3" für eine dritte Gangstufe und "2" für eine zweite Gangstufe vorgesehen, in denen das Schalten jeweils zwischen dem ersten Gang und dieser bezeichneten Gangstufe automatisch durchgeführt wird. Das Schalten der ersten Gangstufe mit Bremswirkung erfolgt elektronisch in Abhängigkeit der Schaltposition "2" und der Fahrgeschwindigkeit. Die sensorisch erfaßte Stellung des Wählhebels 5 wird über Signalübertragungseinrichtungen 7, 8 als Signale an das elektronische Steuergerät 2 ausgegeben.

Neben der ersten Schalteinrichtung 4 zur automatischen Schaltung in dem dynamischen Schaltprogramm ist eine zweite Schalteinrichtung 9 zur Ausführung eines Manuell-Programms mittels Tipp-Schaltung vorgesehen. Hierzu ist parallel zur ersten Schaltgasse 6 eine zweite Schaltgasse 10 angeordnet, in die der Wählhebel 5 über eine Quergasse 11 umschaltbar ist. Zur Erfassung der Umschaltbewegung zwischen der ersten Schalteinrichtung 4 und der zweiten Schalteinrichtung 9 ist ein nur symbolisch in Fig. 1 angedeuteter Sensor 12 im Bereich der Quergasse 11 angeordnet. Somit kann mit dem Wählhebel 5 gleichzeitig die erste Schalteinrichtung 4 zur Ausführung des dynamischen Schaltprogramms und die zweite Schalteinrichtung 9 mit dem Manuell-Programm bedient werden.

Wenn sich der Wählhebel 5 in der zweiten Schalteinrichtung 9 befindet, wird er von Federn 13, 14 in einer strichliert in Fig. 1 gezeigten neutralen Mittellage gehalten, aus der heraus er durch manuelle Betätigung in eine erste mit einem Pfeil 15 angedeutete Richtung zur Auslösung von Hochschaltungen und in eine mit einem Pfeil 16 angedeutete zweite Richtung zur Auslösung von Rückschaltungen bewegbar ist.

Die konstruktive Ausgestaltung des Wählhebels bezüglich seiner Verschwenkbarkeit in der Kulisse der Schaltvorrichtung 1 entspricht dabei an sich herkömmlicher Bauart, und kann beispielsweise wie in der DE 38 07 881 C2 beschrieben ausgestaltet sein.

Beim Verschieben des Wählhebels in Richtung 15 zur Hochschaltung erreicht dieser zunächst eine Schaltposition "+" zur Einfach-Hochschaltung in die nächsthöhere Gangstufe, in der ein Plus-Sensor 17 anspricht und ein entsprechendes Signal an das elektronische Steuergerät 2 ausgibt. Wenn der Fahrer den Wählhebel 5 weiter in Richtung 15 verschiebt, muß ein durch eine weitere Feder 18 mit größerer Federkraft realisierter Bewegungswiderstand für den Wählhebel 5 überwunden werden, bevor dieser eine Schaltposition "++" zur Maximal-Hochschaltung in die Gangstufe mit größtmöglicher Übersetzung erreicht und darin einen Plus-Plus-Sensor 19 kontaktiert, welcher diese Schaltbewegung als Signal an das elektronische Steuergerät 2 ausgibt.

In analoger Weise ist in die entgegengesetzte Bewegungsrichtung 16 von der Mittellage in der zweiten Schaltgasse 6 aus gesehen eine Schaltposition "-" für die Wähleinrichtung 5 zur Einfach-Rückschaltung in die nächstniedrigere Gangstufe und eine nachgeschaltet angeordnete Schaltposition "--" zur Maximalrückschaltung in die Gangstufe mit kleinstmöglicher Übersetzung vorgesehen. Der Schaltposition "-" zur Einfach-Rückschaltung, in welche der Wählhebel 5 entgegen der Kraft der Feder 14 verschiebbar ist, ist ein Minus-Sensor 20 und der Schaltposition "--" zur Maximal-Rückschaltung ist entsprechend ein Minus-Minus-Sensor 21, welcher ebenfalls mit dem elektronischen Steuergerät 2 verbunden ist, zugeordnet. Um in die Schaltposition "--" zur Maximal-Rückschaltung gelangen zu können, muß auch hier wie bei einer Maximal-Hochschaltung die Kraft einer zweiten Feder 22, welche einen erhöhten Bewegungswiderstand vom Übergang der Schaltposition "-" zur Schaltposition "--" realisiert, überwunden werden.

Selbstverständlich kann der Bewegungswiderstand für den Wählhebel 5 zum Einlegen der Schaltposition "--" zur Maximalrückschaltung oder der Schaltposition "++" zur Maximal-Hochschaltung auch mit anderen mechanischen, hydraulischen oder pneumatischen Mitteln aufgebracht werden.

Wie Fig. 2 zeigt, kann die zweite Schalteinrichtung 9 auch separat von der ersten Schalteinrichtung 4 vorgesehen sein und z.B. an einem Multifunktionslenkrad 23 angebracht sein. In diesem Fall ist die Wähleinrichtung zur Betätigung der zweiten Schalteinrichtung 9 mit dem Manuell-Programm nicht mehr identisch mit dem Wählhebel 5 der ersten Schalteinrichtung 9. Die Wähleinrichtung der zweiten Schalteinrichtung 9 kann hier beispielsweise als ein Tipp-Taster 24 ausgebildet sein. In der in Fig. 2 äußerst schematisiert dargestellten Ausführung weist der Tipp-Taster 24 eine erste Taste 25 für Rückschaltungen und eine zweite Taste 26 für Hochschaltungen auf.

Die Tasten 25 und 26 befinden sich im unbetätigten Zustand in einer neutralen "Mittellage", d.h. daß keine der Tasten 25 oder 26 zur Auslösung einer ihr zugeordneten Funktion gedrückt ist. Die Tasten 25 und 26 weisen jeweils zwei Taststufen auf, wobei der ersten Taststufe der Taste 25 die Schaltposition "-" zur Einfach-Rückschaltung und der zweiten Taststufe, bei der die Taste 25 tiefer gedrückt ist, die Schaltposition "--" zur Maximal-Rückschaltung zugeordnet ist. Analog hierzu weist die Taste 26 eine erste Taststufe für die Schaltposition "+" zur Einfach-Hochschaltung und eine zweite, tiefere Taststufe für die Schaltposition "++" zur Maximal-Hochschaltung auf, wobei die Schaltposition "++" fakultativ vorhanden sein kann. Auch bei dieser Ausführung der zweiten Schalteinrichtung 9 ist beim Übergang von der Schaltposition "-" für Einfach-Rückschaltung zur Schaltposition "--" für Maximal-Rückschaltung sowie analog am Übergang von der Schaltposition "+" zur Schaltposition "++" ein erhöhter Bewegungswiderstand zu überwinden, um versehentliche maximale Rückoder Hochschaltungen zu verhindern. Die konstruktive Ausgestaltung der Tasten 25 und 26 der Wähleinrichtung 24 kann dabei der für Tasten allgemein bekannten Ausführungen entsprechen.

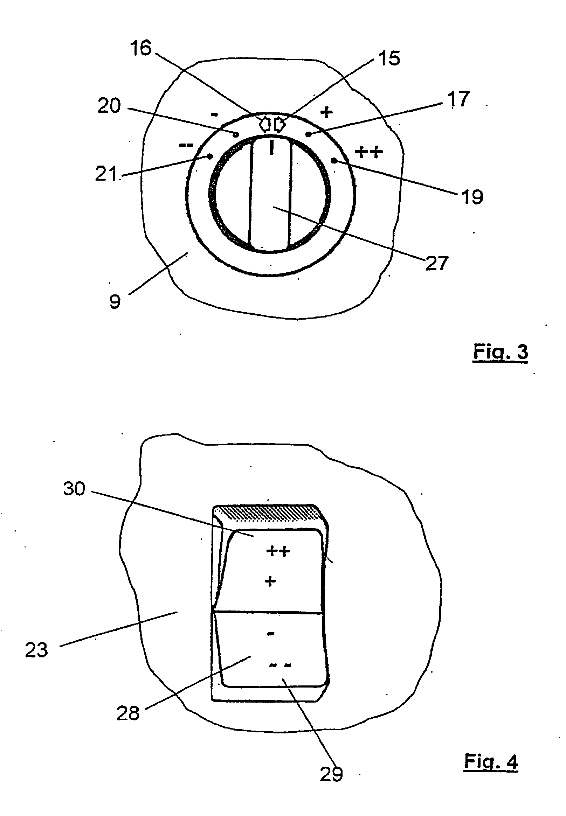

In Fig. 3 ist eine weitere alternative Ausführung der Wähleinrichtung für die zweite Schalteinrichtung 9 zur Ausführung des Manuell-Programms mit einem Drehschalter 27 dargestellt. Der in neutraler Mittellage dargestellte und wie herkömmliche Drehschalter ausgebildete Schalter 27 ist links in Richtung 16 zur Ausführung von Rückschaltungen zunächst in die Schaltposition "-" zur Einfachrückschaltung und bei weiterem Verdrehen in Richtung 16 entgegen erhöhter Widerstandskraft in die Schaltposition "--" zur Maximal-Rückschaltung drehbar, wobei der Drehschalter 27 den Minus-Sensor 20 und den Minus-Minus-Sensor 21, welche mit dem elektronischen Steuergerät 2 verbunden sind und hier nur symbolisch angedeutet sind, kontaktiert. In die entgegengesetzte Richtung 15 ist der Drehschalter 27 zur Ausführung von Einfach-Hochschaltungen in die Schaltposition "+" und zum Auslösen einer Maximal-Hochschaltung in die Schaltposition "++" verdrehbar, wobei den Schaltpositionen auch hier der Plus-Sensor 17 bzw. der Plus-Plus-Sensor 19 zugeordnet sind.

In Fig. 4 ist eine weitere Ausführung der Wähleinrichtung für die zweite Schalteinrichtung 9 als ein Wipp-Schalter 28 gezeigt, der in der gezeigten Ausführung an dem Multifunktionslenkrad 23 angebracht ist, aber selbstverständlich auch an anderen Stellen in dem Fahrzeug vorgesehen sein kann.

Der Wipp-Schalter 28 ist in an sich bekannter Art ausgestaltet und weist in jede Wipp-Richtung zwei Stufen auf, wobei bei Betätigung eines unteren Bereiches 29 des Wipp-Schalters 28 zunächst die Schaltposition "-" zur Einfach-Rückschaltung und bei verstärktem Drücken die Schaltposition "--" zur Maximal-Rückschaltung erreicht wird. In gleicher Weise wird bei Drücken eines oberen Bereiches 30 des Wipp-Schalters 28 die Schaltposition "+" und bei stärkerer Betätigung die fakultativ vorgesehene Schaltposition "++" zur Maximal-Hochschaltung erreicht.

Die beschriebene erfindungsgemäße Schalteinrichtung 1 ist insbesondere für Automatgetriebe mit vielen Gangstufen, bei denen ein großer Gangsprung mit einer einzigen Tippbewegung durchgeführt werden kann, geeignet. Um unzulässig große Rückschaltungen zu verhindern, ist dabei unter "Maximal-Rückschaltung" jeweils zu verstehen, daß die Rückschaltung nach unten drehzahlmäßig abgesichert ist, d.h., daß eine Rückschaltung nur möglich ist, wenn nach der Rückschaltung die zulässige Grenzdrehzahl nicht überschritten wird. Damit wird sichergestellt, daß das Getriebe durch eine mißbräuchliche Bedienung des Manuell-Programms nicht beschädigt wird.

### Bezugszeichen

- 1: Schaltvorrichtung
- 2: elektronisches Steuergerät
- 3: Automatgetriebe
- 4: erste Schalteinrichtung für automatisches Schaltprogramm
- 5: Wähleinrichtung, Wählhebel
- 6: erste Schaltgasse
- 7: Signalübertragungseinrichtung
- 8.: Signalübertragungseinrichtung
- 9: zweite Schalteinrichtung für Manuell-Programm
- 10: zweite Schaltgasse
- 11: Quergasse
- 12: Sensor
- 13: Feder
- 14: Feder
- 15: Schaltbewegungsrichtung der Wähleinrichtung zur Hochschaltung
- 16: Schaltbewegungsrichtung der Wähleinrichtung zur Rückschaltung
- 17: Plus-Sensor
- 18: Feder
- 19: Plus-Plus-Sensor
- 20: Minus-Sensor
- 21: Minus-Minus-Sensor
- 22: Feder
- 23: Multifunktionslenkrad
- 24: Tipp-Taste
- 25: Taste
- 26: Taste
- 27: Drehschalter
- 28: Wipp-Schalter
- 29: unterer Bereich des Wipp-Schalters
- 30: oberer Bereich des Wipp-Schalters

## Patentansprüche

1. Schaltvorrichtung für ein durch ein elektronisches Steuergerät (2) gesteuertes Fahrzeugautomatgetriebe (3), insbesondere für Kraftwagen, mit einer ersten Schalteinrichtung (4), in der mittels manueller Anwahl verschiedene automatisch zu schaltende Getriebegänge vorwählbar sind, und mit einer zweiten mittels einer Wähleinrichtung (5, 24, 27, 28) betätigbaren Schalteinrichtung (9), in der die Wähleinrichtung (5, 24, 27, 28) in neutraler Mittellage gehalten ist, aus der sie durch manuelle Betätigung in eine erste Richtung (15) zur Auslösung von Hochschaltungen und in eine zweite Richtung (16) zur Auslösung von Rückschaltungen bewegbar ist, wobei die Schaltbewegungen der Wähleinrichtung (5, 24, 27, 28) sensorisch erfaßt werden und als Signale in das Steuergerät (2) eingehen, wobei die zweite Schalteinrichtung (9) in der zweiten Richtung (16) eine Schaltposition (-) für die Wähleinrichtung (5, 24, 27, 28) zur Einfach-Rückschaltung in die nächstniedrigere Gangstufe und in der ersten Richtung (15) eine Schaltposition (+) für die Wähleinrichtung (5, 24, 27, 28) zur Einfach-Hochschaltung in die nächsthöhere Gangstufe aufweist und eine weitere Schaltposition (--) zur Maximal-Rückschaltung in die Gangstufe mit kleinstmöglicher Übersetzung und/oder eine weitere Schaltposition (++) zur Maximal-Hochschaltung in die Gangstufe mit größstmöglicher Übersetzung anwählbar sind,
**dadurch gekennzeichnet, dass**
die Schaltposition (--) zur Maximal-Rückschaltung und/oder die Schaltposition (++) zur Maximal-Hochschaltung in der jeweiligen Betätigungsrichtung (15, 16) im Vergleich zu den Schaltpositionen zur Einfachschaltung weiter entfernt von der neutralen Mittellage der Wähleinrichtung (5, 24, 27, 28) angeordnet sind.

2. Schaltvorrichtung nach Anspruch 1,
**dadurch gekennzeichnet, dass**
am Übergang von der Schaltposition (-) zur Einfach-Rückschaltung in die Schaltposition (--) zur Maximal-Rückschaltung bzw. am Übergang von der Schaltposition (+) zur Einfach-Hochschaltung in die Schaltposition (++) zur Maximal-Hochschaltung ein erhöhter Bewegungswiderstand für die Wähleinrichtung (5) vorgesehen ist.

3. Schaltvorrichtung nach Anspruch 1 oder 2,
**dadurch gekennzeichnet, dass**
in der zweiten Schalteinrichtung (9) ein die Einfach-Rückschaltungen auslösender Minus-Sensor (20) und ein die Maximal-Rückschaltungen auslösender Minus-Minus-Sensor (21) und/oder ein die Einfach-Hochschaltungen auslösender Plus-Sensor (17) und ein die Maximal-Hochschaltungen auslösender Plus-Plus-Sensor (19) angeordnet ist.

4. Schaltvorrichtung nach Anspruch 3,
**dadurch gekennzeichnet, dass**
der Plus-Sensor (17) und der Plus-Plus-Sensor (19) und/oder der Minus-Sensor (20) und der Minus-Minus-Sensor (21) in der zweiten Schalteinrichtung (9) derart angeordnet sind, dass der Plus-Plus-Sensor (19) dem Plus-Sensor (17) und der Minus-Minus-Sensor (21) dem Minus-Sensor (20) von der Mittellage der Wähleinrichtung (5, 24, 27, 28) aus gesehen nachgeordnet ist.

5. Schaltvorrichtung nach einem der Ansprüche 1 bis 4,
**dadurch gekennzeichnet, dass**
die Wähleinrichtung (5) in der zweiten Schalteinrichtung (9) mittels Federn (13, 14) in neutraler Mittellage gehalten ist.

6. Schaltvorrichtung nach einem der Ansprüche 1 bis 5,
**dadurch gekennzeichnet, dass**
der Wähleinrichtung (5, 24, 27, 28) zum Anwählen der Schaltposition (-, +) der Einfach-Rückschaltung oder Einfach-Hochschaltung eine Federkraft einer jeweils ersten Feder (13, 14) und zum Anwählen der Schaltposition (--, ++) der Maximal-Rückschaltung oder Maximal-Hochschaltung eine größere Federkraft einer jeweils zweiten Feder (18, 22) entgegenwirkt.

7. Schaltvorrichtung nach einem der Ansprüche 1 bis 6, **dadurch gekennzeichnet, daß** die Wähleinrichtung als ein Tip-Taster (24) ausgebildet ist.

8. Schaltvorrichtung nach einem der Ansprüche 1 bis 6, **dadurch gekennzeichnet, daß** die Wähleinrichtung als ein Wipp-Schalter (28) ausgebildet ist.

9. Schaltvorrichtung nach einem der Ansprüche 1 bis 6, **dadurch gekennzeichnet, daß** die Wähleinrichtung als ein Drehschalter (27) ausgebildet ist.

10. Schaltvorrichtung nach einem der Ansprüche 1 bis 9,
**dadurch gekennzeichnet, dass**
die Wähleinrichtung (27, 28) und wenigstens die zweite Schalteinrichtung (9) an einem Multifunktionslenkrad (23) angebracht sind.

11. Schaltvorrichtung nach einem der Ansprüche 1 bis 6,
**dadurch gekennzeichnet, dass**
die Wähleinrichtung als wählhebel (5) zur Betätigung der ersten Schalteinrichung (4) und der zweiten Schalteinrichtung (9) ausgebildet ist, wobei der Wählhebel (5) von der eine erste Schaltgasse (6) aufweisenden ersten Schalteinrichtung (4) über eine Quergasse (11) in eine zu der ersten Schaltgasse (6) parallele zweite Schaltgasse (10) der zweiten Schalteinrichtung (9) umschaltbar ist.

12. Schaltvorrichtung nach Anspruch 11,
**dadurch gekennzeichnet, dass**
der Minus-Sensor (20) und der Minus-Minus-Sensor (21) sowie gegebenenfalls der Plus-Sensor (17) und der Plus-Plus-Sensor (19) an der zweiten Schaltgasse (10) angeordnet sind.

## Claims

1. Shift device for a vehicle automatic transmission (3) that is controlled by an electronic controller (2), particularly for cars, comprising a first shift means (4) in which different transmission gears that are to be automatically engaged can be preselected by means of manual selection, and comprising a second shift means (9), that can be actuated by means of a selector means (5, 24, 27, 28), in which the selector means (5, 24, 27, 28) is held in a neutral central position from which it can be moved, by manual actuation, in a first direction (15) for the purpose of triggering up-shifts and in a second direction (16) for the purpose of triggering down-shifts, the shift movements of the selector means (5, 24, 27, 28) being detected by sensors and input as signals into the controller (2), the second shift means (9) having, in the second direction (16), a shift position (-) for the selector means (5, 24, 27, 28) for the purpose of single down-shifting to the next lower gear level and, in the first direction (15), a shift position (+) for the selector means (5, 24, 27, 28) for the purpose of single up-shifting to the next higher gear level, and a further shift position (--) for maximum down-shifting to the gear level having the least possible transmission ratio and/or a further shift position (++) for maximum up-shifting to the gear level having the greatest possible transmission ratio being selectable,
**characterized in that**
the shift position (--) for maximum down-shifting and/or the shift position (++) for maximum up-shifting are disposed, in the respective actuation direction, at a greater distance from the neutral central position of the selector means (5, 24, 27, 28) than the shift positions for single shifting.

2. Shift device according to claim 1,
**characterized in that**
an increased movement resistance for the selector means (5) is provided at the transition from the shift position (-) for single down-shifting to the shift position (--) for maximum down-shifting and at the transition from the shift position (+) for single up-shifting to the shift position (++) for maximum up-shifting.

3. Shift device according to either of claims 1 or 2,
**characterized in that**
disposed in the second shift means (9) are a minus sensor (20) triggering the single down-shifts, and a minus-minus sensor (21) triggering the maximum down-shifts), and/or a plus sensor (17) triggering the single up-shifts, and a plus-plus sensor (19) triggering the maximum up-shifts.

4. Shift device according to claim 3,
**characterized in that**
the plus sensor (17) and the plus-plus sensor (19) and/or the minus sensor (20) and the minus-minus sensor (21) are disposed in the second shift means (9) in such a way that, relative to the central position of the selector means (5, 24, 27, 28), the plus-plus sensor (19) succeeds the plus sensor (17) and the minus-minus sensor (21) succeeds the minus sensor (20).

5. Shift device according to any one of claims 1 to 4,
**characterized in that**,
in the second shift means (9), the selector means (5) is held in a neutral central position by means of springs (13, 14).

6. Shift device according to any one of claims 1 to 5,
**characterized in that**
the selector means (5, 24, 27, 28) for selecting the shift position (-, +) of the single down-shift or single up-shift is opposed by a spring force of a respectively first spring (13, 14) and that for selecting the shift position (--, ++) of the maximum down-shift or maximum up-shift is opposed by a greater spring force of a respectively second spring (18, 22).

7. Shift device according to any one of claims 1 to 6,
**characterized in that** the selector means is designed as a touch key (24).

8. Shift device according to any one of claims 1 to 6,
**characterized in that** the selector means is designed as a rocker switch (28).

9. Shift device according to any one of claims 1 to 6,
**characterized in that** the selector means is designed as a rotary switch (27).

10. Shift device according to any one of claims 1 to 9,
**characterized in that**
the selector means (27, 28) and at least the second shift means (9) are mounted on a multi-function steering wheel (23).

11. Shift device according to any one of claims 1 to 6,
**characterized in that**
the selector means is designed as a selector lever (5) for actuating the first shift means (4) and the second shift' means (9), the selector lever (5) being capable of being changed over, via a transverse track (11), from the first shift means (4), comprising a first shift track (6), into a second shift track (10), parallel to the first shift track (6), of the second shift means (9).

12. Shift device according to claim 11,
**characterized in that**
the minus sensor (20) and the minus-minus sensor (21), as well as, optionally, the plus sensor (17) and the plus-plus sensor (19) are disposed on the second shift track (10).

## Revendications

1. Dispositif de changement de vitesse pour boîte de vitesses automatique (3) commandée par un pilote électronique (2), destiné en particulier aux véhicules automobiles, muni d'un premier dispositif de changement de vitesse (4) dans lequel différents rapports de boîte de vitesses à enclencher automatiquement peuvent être présélectionnés manuellement, et d'un deuxième dispositif de changement de vitesse (9) actionnable par un dispositif de sélection (5, 24, 27, 28), dans lequel le dispositif de sélection (5, 24, 27, 28) est maintenu en position médiane, à partir de laquelle il peut être déplacé dans une première direction (15) par une action manuelle pour déclencher le passage aux rapports supérieurs, et dans une deuxième direction (16) pour déclencher les rétrogradages, les mouvements de changement de vitesse du dispositif de sélection (5, 24, 27, 28) étant captés par des capteurs et transmis sous forme de signaux au pilote électronique (2), le deuxième dispositif de changement de vitesse (9) présentant dans la deuxième direction (16) une position de changement de vitesse (-) du dispositif de sélection (5, 24, 27, 28) destinée au rétrogradage simple au rapport immédiatement inférieur et dans la première direction (15) une position de changement de vitesse (+) du dispositif de sélection (5, 24, 27, 28) destinée à passer au rapport immédiatement supérieur, et une autre position de changement de vitesse (- -) destinée au rétrogradage maximum à la vitesse présentant le plus petit rapport et/ou une autre position de changement de vitesse (+ +) pour passer à la vitesse maximale, présentant le plus grand rapport possible,
**caractérisé par le fait**
**que** la position de changement de vitesse (--) destinée au rétrogradage maximum et/ou la position de changement de vitesse (++) destinée au passage au plus grand rapport possible sont plus éloignées, dans chaque direction (15, 16), du point neutre du dispositif de sélection (5, 24, 27, 28) que les positions de changement de vitesse destinées au passage au rapport immédiatement supérieur ou inférieur.

2. Dispositif de changement de vitesse selon la revendication 1,
**caractérisé par le fait**
**qu'**il est prévu, au niveau du dispositif de sélection (5), une résistance accrue à la transition de la position de changement de vitesse (-) du rétrogradage simple à la position de changement de vitesse (--) du rétrogradage maximum ou à la transition de la position de changement de vitesse (+) du passage au rapport immédiatement supérieur à la position de changement de vitesse (++) du passage au rapport maximal possible.

3. Dispositif de changement de vitesse selon la revendication 1 ou 2,
**caractérisé par le fait**
**que** dans le deuxième dispositif de changement de vitesse (9), on a placé un capteur "moins" (20) qui déclenche les rétrogradages au rapport immédiatement inférieur et un capteur "moins - moins" (21) qui déclenche les rétrogradages maximaux et/ou un capteur "plus" (17) qui déclenche les passages au rapport immédiatement supérieur et un capteur "plus - plus" (19) qui déclenche les passages au rapport maximal.

4. Dispositif de changement de vitesse selon la revendication 3,
**caractérisé par le fait**
**que** le capteur "plus" (17) et le capteur "plus - plus" (19) et/ou le capteur "moins" (20) et le capteur "moins - moins" (21) sont disposés dans le deuxième dispositif de changement de vitesse (9) de sorte que le capteur "plus - plus" (19) soit placé après le capteur "plus" (17) et le capteur "moins - moins" (21) après le capteur "moins" (20) par rapport à la position neutre du dispositif de sélection (5, 24, 27, 28).

5. Dispositif de changement de vitesse selon l'une quelconque des revendications 1 à 4,
**caractérisé par le fait**
**que** le dispositif de sélection (5) est maintenu en position médiane neutre dans le deuxième dispositif de changement de vitesse (9) à l'aide de ressorts (13, 14).

6. Dispositif de changement de vitesse selon l'une quelconque des revendications 1 à 5,
**caractérisé par le fait**
**qu'**au dispositif de sélection (5, 24, 27, 28) destiné à la sélection de la position de changement de vitesse (-, +) de rétrogradage simple ou de passage au rapport immédiatement supérieur est opposée à chaque fois la force d'un premier ressort (13, 14), et à la sélection de la position de changement de vitesse (--, ++) du rétrogradage maximum ou du passage au rapport maximal est opposée à chaque fois la force plus puissante d'un deuxième ressort (18, 22).

7. Dispositif de changement de vitesse selon l'une quelconque des revendications 1 à 6,
**caractérisé par le fait**
**que** le dispositif de sélection prend la forme d'un palpeur tactile (24).

8. Dispositif de changement de vitesse selon l'une quelconque des revendications 1 à 6,
**caractérisé par le fait**
**que** le dispositif de sélection prend la forme d'un interrupteur à bascule (28).

9. Dispositif de changement de vitesse selon l'une quelconque des revendications 1 à 6,
**caractérisé par le fait**
**que** le dispositif de sélection prend la forme d'un interrupteur rotatif (27).

10. Dispositif de changement de vitesse selon l'une quelconque des revendications 1 à 9,
**caractérisé par le fait**
**que** le dispositif de sélection (27, 28) et au moins le deuxième dispositif (9) sont placés sur un volant multifonctionnel (23).

11. Dispositif de changement de vitesse selon l'une quelconque des revendications 1 à 6,
**caractérisé par le fait**
**que** le dispositif de sélection permettant d'actionner le premier dispositif de changement de vitesse (4) et le deuxième dispositif de changement de vitesse (9) est un levier de sélection (5), le levier de sélection (5) pouvant être enclenché à partir du premier dispositif de changement de vitesse (4) , qui présente une première encoche (6), en empruntant une encoche transversale (11) dans une deuxième encoche (10) parallèle à la première encoche (6) du deuxième dispositif de changement de vitesse (9).

12. Dispositif de changement de vitesse selon la revendication 11,
**caractérisé par le fait**
**que** le capteur "moins" (20) et le capteur "moins - moins" (21) ainsi qu'éventuellement le capteur "plus" (17) et le capteur "plus - plus" (19) sont placés le long de la deuxième encoche de changement de vitesse (10).
